# EUROPEAN PATENT APPLICATION

(11) **EP 4 755 763 A1**
(43) Date of publication of application: **10.06.2026**
(21) Application number: 25220906.9
(22) Date of filing: 04.12.2025
(51) Int. Cl.: B62D 21/07, B62D 21/17, B62D 35/00

(54) **FRAME PORTION FOR A MOTOR VEHICLE HAVING A DOOR FRAME WITH A LONGITUDINAL BEAM DEFINING AN AERODYNAMIC CONDUIT**

(30) Priority: 09.12.2024 IT 202400027906
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A frame portion for a motor vehicle (1) defines a passenger compartment (6) and includes a door frame (7) for attaching a side door (4), the door frame (7) defining an access passage (10) to allow side access to the passenger compartment (6) and including a first and a second pillar (11, 12) extending upwards from respective lower ends (11b, 12b) towards respective upper ends (11c, 12c), the first pillar (11) being more forward than the second pillar (12) according to a direction of advancement of the motor vehicle, a longitudinal beam (13) fixed to the first and second pillars (11, 12) at the lower ends (11b, 12b) and having a beam portion (14) extending longitudinally between the lower ends (11b, 12b), and a through conduit (25) extending longitudinally through the first pillar (11) and the longitudinal beam (13) with an inlet opening (26) and an outlet opening (27) respectively upstream and downstream of the beam portion (14) according to a further direction opposite to the direction of advancement of the motor vehicle (1).

## Description

### CROSS-REFERENCE TO RELATED APPLICATIONS

This patent application claims priority from Italian patent application no. 102024000027906 filed on December 9, 2024, the entire disclosure of which is incorporated herein by reference.

### FIELD OF THE ART

The invention relates to a frame or a frame portion for a motor vehicle and more in particular to a door frame of the frame portion.

### PRIOR ART

As is known, the frame of a motor vehicle includes a frame portion or cell defining a passenger compartment of the motor vehicle itself.

Furthermore, the frame portion includes a door frame for attaching a side door defining a side opening for providing access to the passenger compartment, in particular to a driver.

The door frame includes two pillars, of which one foremost (called in particular "pillar A") and one rearmost (called in particular "pillar B"), and a lower longitudinal beam (also called under-door beam or sill) that extends longitudinally at least partially between the pillars and connects them, being fixed to them.

The pillars therefore protrude vertically or more precisely upwards from the longitudinal beam, thus delimiting with the latter a lower portion of the side opening.

During the advancement of the motor vehicle, the foremost pillar is normally subject to an aerodynamic pressure, in particular due to an aerodynamic flow that from the front of the motor vehicle passes through a front wheel well, in turn defined or above delimited by a relative wheel arch, and facing or in any case communicating with the more forward pillar.

Therefore, the need is felt to decrease the aerodynamic pressure at the pillar or more generally in the wheel well, i.e. more precisely in the volume between a front wheel accommodated in the wheel well and the foremost pillar.

An aim of the invention is to meet the need set out above, preferably in a simple and reliable manner.

### DISCLOSURE OF THE INVENTION

The aim is achieved by a motor vehicle as defined in claim 1.

The dependent claims define particular embodiments of the invention.

### BRIEF DESCRIPTION OF THE DRAWINGS

In the following, an embodiment of the invention is described for a better understanding thereof by way of nonlimiting example and with reference to the accompanying drawings in which:
- Figure 1 is a perspective view of a motor vehicle comprising a frame portion according to the invention,

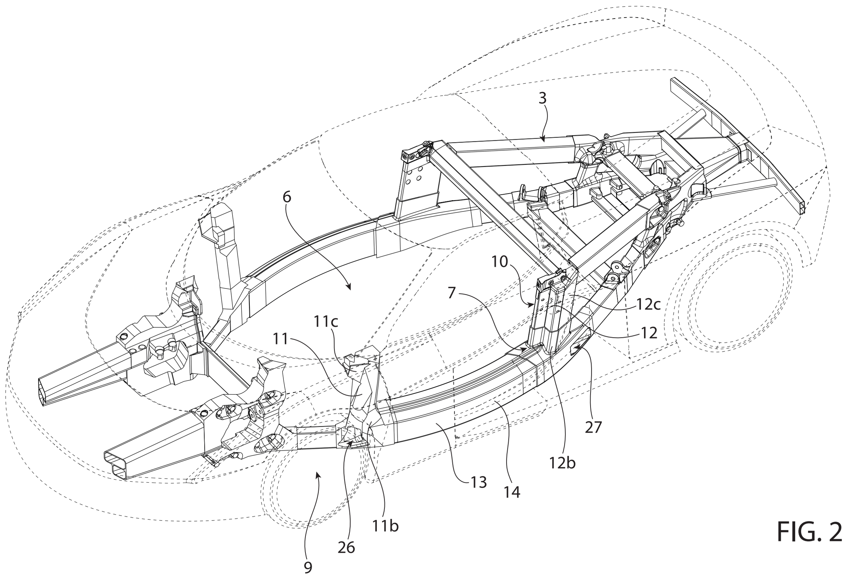

- Figure 2 is similar to Figure 1 but with parts of the motor vehicle in transparency, so that the portion of the frame is visible,

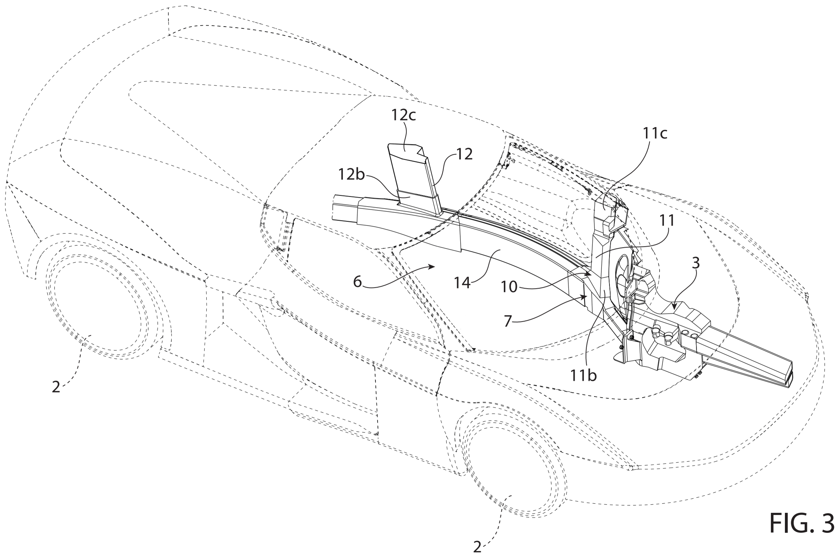

- Figure 3 is a further perspective view of the motor vehicle as shown in Figure 2 according to a distinct perspective point of view,

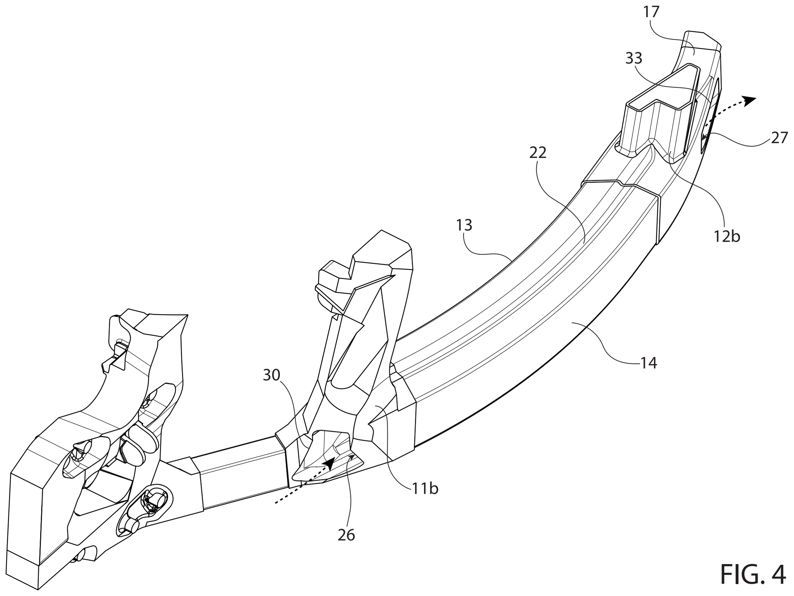

- Figure 4 is a perspective view, on an enlarged scale, of a detail of the frame portion, and

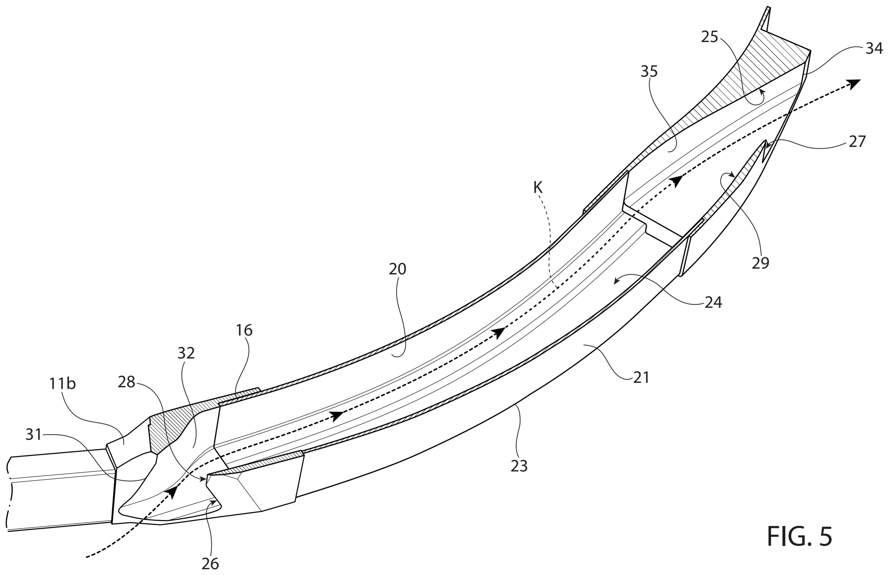

- Figure 5 presents a cut-away view of the detail of Figure 4, with parts removed for clarity, according to a horizontal sectional plane.

### EMBODIMENTS OF THE INVENTION

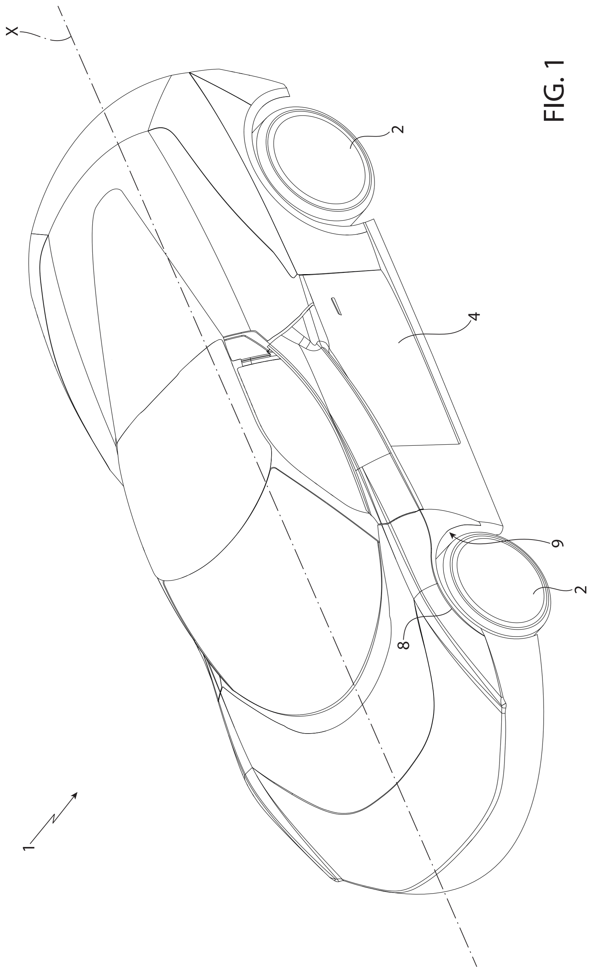

In Figure 1, reference numeral 1 is used to denote, as a whole, a motor vehicle.

The motor vehicle 1 comprises a plurality of wheels 2 and a frame 3, in particular suspended with respect to the wheels 2 by means of suspensions, for example of known type and not shown.

The motor vehicle 1 further comprises a side door 4 coupled or attached to the frame 3, in particular in a movable manner between an open position and a closed position.

The motor vehicle 1 has a normal direction of advancement along a longitudinal axis or roll axis X of the motor vehicle 1. The direction of advancement is also applicable to the frame 3, as the latter is intended to be part of the motor vehicle 1.

Hereinafter, expressions such as frontal, rear, front, back, in front, behind, and the like shall be understood with reference to the direction of advancement.

Similarly, expressions such as lower, upper, above, below, at the top, at the bottom, high, low and the like shall be understood with reference to the normal conditions of use of the motor vehicle 1 for which the frame 3 is intended.

The frame 3 comprises or is defined by a frame portion defining a passenger compartment 6 of the motor vehicle 1.

The frame portion comprises at least one door frame 7 for the coupling or attachment of the door 4.

Preferably, the frame portion or more generally the frame 3 further comprises a wheel arch 8 defining, in particular below it, a wheel well 9 intended to accommodate one of the wheels 2.

In particular, the wheel well 9 is arranged in front of the door frame 7.

The door frame 7 defines or delimits and in particular circumscribes (i.e. delimits internally) an access opening 10 for providing side access to the passenger compartment 6.

The access opening 10 is in particular closed and opened towards the outside of the motor vehicle 1 from the door 4 respectively when the door 4 is in the open position and in the closed position.

The door frame 7 comprises at least two pillars 11, 12 and a longitudinal beam 13, in particular an under-door beam or sill.

The pillar 11 is more forward than the pillar 12. Independently and preferably, the pillars 11, 12 define the longitudinal limits or ends (i.e., according to the direction of advancement) of the access opening 10. Therefore, the pillars 11, 12 define the so-called A-pillar and B-pillar of the door frame 7.

The pillars 11, 12 extend upwards or vertically starting from respective lower ends 11b, 12b towards or up to respective upper ends 11c, 12c.

The longitudinal beam 13 is fixed and more particularly welded to the pillars 11, 12 at the lower ends 11b, 12b.

Thus, the longitudinal beam 13 defines a lower longitudinal member of the door frame 7 and more in particular it defines at least in part the lower end of the door frame 7.

Preferably, the longitudinal beam 13 is or comprises a tubular or box-shaped beam. Independently and preferably, each of the pillars 11, 12, taken individually and independently of the other, can be or comprise at least one casting member, i.e. a beam obtained by casting molten metal on respective moulds; the casting member is substantially solid, i.e. it occupies a full volume except for holes or hollow parts obtained on a smaller portion of its extension.

In other words, while the volume occupied by the longitudinal beam 13 is for the most part (e.g. more than 70%) empty, the respective volumes occupied by the casting members of the pillars 11, 12 are for the most part solid (e.g. more than 70%). Clearly, the expressions solid and empty refer to the presence or absence of solid material, respectively.

The longitudinal beam 13 comprises a beam portion 14 extending longitudinally between the lower ends 11b, 12b.

Specifically, for example, the beam portion 14 is an intermediate portion of the longitudinal beam 13, whereby the latter may comprise a front end 16 and/or a rear end 17 according to the direction of advancement.

In greater detail, the ends 16, 17, independently of each other, interpenetrate the lower ends 11b, 12b.

Here, the end 16 ends at the lower end 11b.

In particular, independently, the end 17 ends downstream of the pillar 12 or of the lower portion 12b itself according to a (longitudinal) direction opposite to the direction of advancement.

Here, the lower portion 12b protrudes cantilevered from the end 17 which in particular runs longitudinally under the lower portion 12b.

According to an alternative not shown, the end 17 may terminate on the lower end 12b, for example as the end 16 in the embodiment shown.

On the other hand, the beam portion 14 is longitudinally delimited by or between the pillars 11, 12 or more precisely by or between their lower portions 11b, 12b.

The beam portion 14, as well as more generally the longitudinal beam 13, extends longitudinally along an axis K, for example curvilinear and in particular with a concave shape towards the passenger compartment 6.

The beam portion 14 has two side walls 20, 21 facing each other according to a direction transversal to the axis K and of which the wall 20 is the one laterally more internal or closer to the passenger compartment 6 (in other words, the wall 21 is instead the one that is the most exposed laterally to the outside of the motor vehicle 1 or farthest from the passenger compartment 6).

Furthermore, in particular, the beam portion 14 has an upper wall and a lower wall 22, 23, each coupled to both side walls 20, 21 to close the cross-section of the beam portion 14 with respect to the axis K.

The beam portion 14 is internally hollow, thus defining a conduit portion 24 that extends in particular for the entire longitudinal extension (in particular along the axis K) of the beam portion 14.

The conduit portion 24 may also extend so as to be defined in part by the beam portion 14, and defined in part by the end 16 or completed by the cavity defined by the end 16.

The walls 20, 21, in particular together with the walls 22, 23, delimit the conduit portion 24; the conduit portion 24 is delimited between the walls 20, 21 laterally.

The door frame 7 comprises a through conduit 25 extending longitudinally at least through the pillar 11 or more precisely the lower portion 11b and the longitudinal beam 13 (or at least for a part thereof).

The conduit 25 has an inlet opening 26 upstream of the beam portion 14 according to the direction opposite to the direction of advancement. In particular, the inlet opening 26 is on the pillar 11 or more precisely on the lower portion 11b.

Furthermore, the conduit 25 has an outlet opening 27 downstream of the beam portion 14 according to the direction opposite to the direction of advancement.

The conduit 25 extends longitudinally between the inlet opening 26 and the outlet opening 27, whereby it begins and ends with the inlet opening 26 and the outlet opening 27, respectively.

The openings 26, 27 communicate with the outside of the frame portion or frame 3 or more precisely of the motor vehicle 1. Here, in the description, by outside is meant the outside of the passenger compartment 6 or the side opposite to the passenger compartment 6.

The inlet opening 26, as well as the beam portion 14, is arranged in front of the outlet opening 27 according to the direction of advancement.

In the embodiment shown, the outlet opening 27 is on the longitudinal beam 13, in particular on the end 17 and more in particular downstream or below the pillar 12 or the lower portion 12b according to the direction opposite to the direction of advancement.

In other words, the outlet opening 27 is on the part of the end 17 with the pillar 12 longitudinally (or along the axis K) between the beam portion 14 and the same part of the end 17.

Alternatively, the outlet opening 27 may be on the pillar 12 or more precisely on the lower portion 12b.

Preferably, the inlet opening 26 and independently the outlet opening 27 are turned towards the outside of the motor vehicle 1 (on the side opposite to the passenger compartment 6), i.e. they are respectively arranged on faces of the pillar 11 and of the longitudinal beam 13 or of the pillar 12 turned towards the outside of the motor vehicle 1 (on the side opposite to the passenger compartment 6).

In particular, the inlet opening 26 faces the wheel well 9 or at least communicates with it.

Conveniently, the axis K of the longitudinal beam 13 is also the axis of the conduit 25, i.e. the axis along which the conduit 25 extends longitudinally.

The inlet opening 26 is arranged to catch a part of the aerodynamic flow of the motor vehicle 1 during the advancement of the latter along the direction of advancement.

In particular, the inlet opening 26 is turned towards a front of the motor vehicle 1 or of the frame portion; in other words, the axis K at the inlet opening 26 has at least one component along the direction of advancement and preferably also a further side component towards the passenger compartment 6.

The outlet opening 27 defines an outlet path for the part of the aerodynamic flow caught through the inlet opening 26 towards a rear of the motor vehicle 1 or of the frame portion.

In particular, the outlet opening 27 is turned towards the rear of the motor vehicle 1 or of the frame portion; in other words, the axis K at the outlet opening 27 has at least one component along the direction opposite to the direction of advancement and preferably also a further side component towards the outside of the motor vehicle 1.

The conduit 25 comprises the conduit portion 24 and further comprises, in particular, a through hole 28 through the pillar 11 or the lower portion 11b. The through hole 28 begins with the inlet opening 26 and communicates with the conduit portion 24.

Preferably, the conduit 25 comprises a further conduit portion 29 downstream of the conduit portion 24 according to the direction opposite to the direction of advancement.

The conduit portion 29 communicates with the conduit portion 24 and ends with the outlet opening 27.

Specifically, the conduit portion 29 is defined by the end 17; alternatively, the conduit portion 29 could (in particular in the case of the outlet opening 27 on the pillar 12) have been defined by the pillar 12 or by the lower portion 12b, for example as a through hole through the pillar 12 or the lower portion 12b, the through hole being communicating with the conduit portion 24.

The inlet opening 26 has or is delimited by a contour 30 defined by the pillar 11. The contour 30 has a foremost portion or edge 31 according to the direction of advancement.

The edge 31 is connected to the wall 20 by a fillet 32 defined by a surface of the pillar 11 or of the lower portion 11b laterally delimiting the conduit 25 or more precisely the hole 28. In other words, the fillet 32 is an inner surface of the pillar 11 and/or defining a part of the hole 28.

With the fillet 32, the wall 20 extends with structural continuity from the pillar 11, so that the stresses applied to the pillar 11 can propagate along the longitudinal beam 13 with continuity, i.e. without encountering discontinuities or empty parts in the passage from the pillar 11 to the longitudinal beam 13.

Similarly, although independent, the outlet opening 27 has or is delimited by a contour 33 having a rearmost portion or edge 34 according to the direction of advancement.

The edge 34 is connected to the wall 20 by a fillet 35 defined at least in part by a surface of the pillar 12 or the longitudinal beam 13 (in particular the end 17) laterally delimiting the conduit 25 or more precisely the conduit portion 29.

From the foregoing, the advantages of the motor vehicle 1 according to the invention are evident.

Thanks to the conduit 25, the aerodynamic flow in the area of the wheel well 9 has a longitudinal path along the axis K passing through the beam portion 14 and venting towards the rear of the motor vehicle 1 or of the frame portion.

In this way, the pressure exerted by the aerodynamic flow on the pillar 11 drops drastically.

Since the inlet opening 26 and the outlet opening 27 are upstream and downstream of the beam portion 14, the latter can define the conduit portion 24 of the conduit 25 despite being free of holes, in particular on the walls 20, 21. This is extremely advantageous, since the beam portion 14 is a very important load-bearing member of the frame portion, in particular since it is the load-bearing member on which in practice the entire frame 3 is supported; the presence of holes on the beam portion 14 would be particularly pernicious, since, in addition to introducing serious aerodynamic disturbances, it would also introduce the need to reinforce and therefore weigh down the longitudinal beam 13.

Finally, it is clear that modifications and variants can be made to the motor vehicle 1 according to the invention which, however, do not fall outside the scope of protection defined by the claims.

In particular, the shape of each of the components described and shown could be different, with particular reference to the pillars 11, 12, and the longitudinal beam 13.

Finally, expressions such as "upstream of" and "downstream of", according to the direction opposite to the direction of advancement, can be made alternatively as "in front" and "behind", in particular again with reference to the direction of advancement.

## Claims

1. Frame portion for a motor vehicle (1) defining a passenger compartment (6) for the motor vehicle (1) and comprising a door frame (7) for the attachment of a side door (4) of the motor vehicle (1), the door frame (7) defining an access opening (10) for providing a side access to the passenger compartment (6) and comprising
- a first and a second pillar (11, 12) extending upward from respective lower ends (11b, 12b) toward respective upper ends (11c, 12c), the first pillar (11) being more forward than the second pillar (12) according to a direction of advancement of the motor vehicle,
- a longitudinal beam (13) fixed to the first and second pillars (11, 12) at the lower ends (11b, 12b) and having a beam portion (14) extending longitudinally between the lower ends (11b, 12b),
**characterized in that** the door frame (7) further comprises a through conduit (25) extending longitudinally at least through the first pillar (11) and the longitudinal beam (13) with an inlet opening (26) and an outlet opening (27) respectively upstream and downstream of said beam portion (14) according to a further direction opposite to the direction of advancement of the motor vehicle (1).

2. The frame portion according to claim 1, wherein the inlet opening (26) is on the first pillar (11).

3. The frame portion according to claim 1 or 2, wherein the outlet opening (27) is on the second pillar (12) or on a part of a rear end (17) of the longitudinal beam (13), the second pillar (12) being longitudinally arranged between said beam portion (14) and said part of the rear end (17).

4. The frame portion according to any one of the preceding claims, further comprising a wheel arch (8) defining a wheel well (9) for accommodating a wheel (2) of the motor vehicle (1), wherein the inlet opening (26) faces the wheel well (9).

5. The frame portion according to any one of the preceding claims, wherein said beam portion (14) extends longitudinally along an axis (K) and has a first and a second side wall (20, 21) laterally delimiting the conduit (25) and facing each other according to a direction transversal to said axis (K), the first wall (20) being more internal than the second wall (21) with respect to the passenger compartment (6).

6. The frame portion according to claim 5, wherein the first pillar (11) defines a contour (30) of the inlet opening (26), the contour (30) having a foremost first edge (31) according to the direction of advancement, wherein the first edge (31) is connected to the first wall (20) by a first fillet (32) defined by a first surface of the first pillar (11), the first surface laterally delimiting the conduit (25).

7. The frame portion according to claim 5 or 6, wherein the outlet opening (27) is delimited by an contour (33) having a rearmost second edge (34) according to the direction of advancement, wherein the second edge (34) is connected to the first wall (20) by a second fillet (35) defined at least in part by a second surface of the second pillar (12) or the longitudinal beam (13), the second surface laterally delimiting the conduit (25).

8. The frame portion according to any one of claims 5 to 7, wherein said axis (K) is curvilinear.

9. The frame portion according to claim 8, wherein said axis (K) has a concave shape toward the passenger compartment (6).

10. Motor vehicle (1) comprising a frame portion according to any of the preceding claims.
